# EUROPEAN PATENT SPECIFICATION

(11) **EP 0 662 902 B1**
(45) Date of publication and mention of the grant of the patent: **20.03.1996**
(21) Application number: 93921880.6
(22) Date of filing: 29.09.1993
(51) Int. Cl.: B62D 25/14, B60R 21/045, B62D 29/00

(54) **CROSSMEMBER FOR THE DASHBOARD OF A MOTOR VEHICLE**
QUERTEIL FÜR EIN ARMATURENBRETT FÜR EIN KRAFTFAHRZEUG
ELEMENT TRANSVERSAL POUR LE TABLEAU DE BORD D'UN VEHICULE A MOTEUR

(30) Priority: 30.09.1992 DE 4232846
(43) Date of publication of application: 19.07.1995
(73) Proprietor: AUDI AG, D-85045 Ingolstadt (DE)
(72) Inventor: PASCH, Erich, D-74172 Neckarsulm-Obereisesheim (DE); ZUSCHANKO, Hans, D-74172 Neckarsulm (DE); VORTANZ, Carsten, D-74861 Neudenau (DE)
(86) International application number: EP9302650
(87) International publication number: WO9407734

(56) References cited:
- DE-A- 4 016 670
- FR-A- 2 669 885
- US-A- 4 365 826
- US-A- 4 432 565
- US-A- 4 723 792

## Description

The invention relates to a crossmember for the dashboard of a motor vehicle in accordance with the precharacterizing clause of Claim 1.

Crossmembers of this kind, known, for example, from EP 0 141 959, usually consist of sheet metal. It is also known practice to design the crossmember as a one-piece light-alloy die-cast element in order to reduce the weight. However, the production of a crossmember of this kind involves high costs for the die.

It is the object of the invention to provide a crossmember of the generic type which is distinguished, in particular, by lower production costs and, above all, by lower investment for dies.

This object is achieved according to the invention by the features given in the characterizing clause of Claim 1.

Since the parts which form the crossmember comprise light-alloy extruded sections which are merely cut off to the required length and then welded together, the outlay for the production of the crossmember and, in particular, the costs for the die are considerably lower than in the case of a crossmember comprising a die-cast part. However, it has the same advantages in terms of weight as a crossmember consisting of sheet metal.

To ensure secure fixing of the steering-column mount, the lower wall of the driver's-side side part has a greater wall thickness in the area of the fixing points, i.e. at the points at which the threaded holes for the fastening bolts of the steering-column mount are to be provided. For reasons of cost and weight, it is, at the same time, expedient not to embody the entire lower wall with a larger wall thickness but to provide ribs extending in the longitudinal direction over the entire length of this side part, in which ribs the threaded holes for the fastening bolts are provided. This also ensures that, without modifying the external dimensions, the cross-section of the interior space of the side part is only slightly reduced by the thickenings, this being advantageous if this interior space is to be used to guide heating air.

The crossmember according to the invention should preferably be connected to the body only at its ends. Vertical end plates having horizontal bent portions for connection to brackets attached to the A pillars of the body can here be welded to the outer ends of the side parts. The end plates can also be embodied as extruded profiles.

On its lower wall, the passenger-side side part can have means for the fixing of a knee pad, a glove box and/or an air bag.

If, as is customary, the motor vehicle is provided with a heating or air-conditioning system, it is advantageous to design the central part of the crossmember with an approximately L-shaped cross-section, resulting in the formation of a space open towards the bottom and towards the front, i.e. towards the engine compartment, between the inner ends of the side parts, into which space the heating or air-conditioning unit projects.

An illustrative embodiment of the invention is described below with reference to the drawings, in which:
- Fig. 1: shows a perspective view of a crossmember according to the invention,

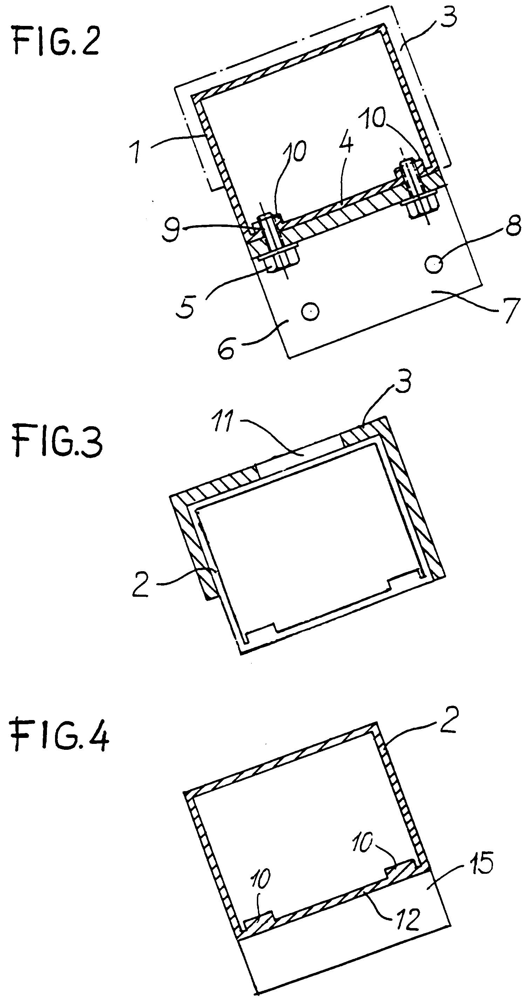

- Fig. 2: shows a section along the line 2-2 in Fig. 1,
- Fig. 3: shows a section along the line 3-3 in Fig. 1 and
- Fig. 4: shows a section along the line 4-4 in Fig. 1.

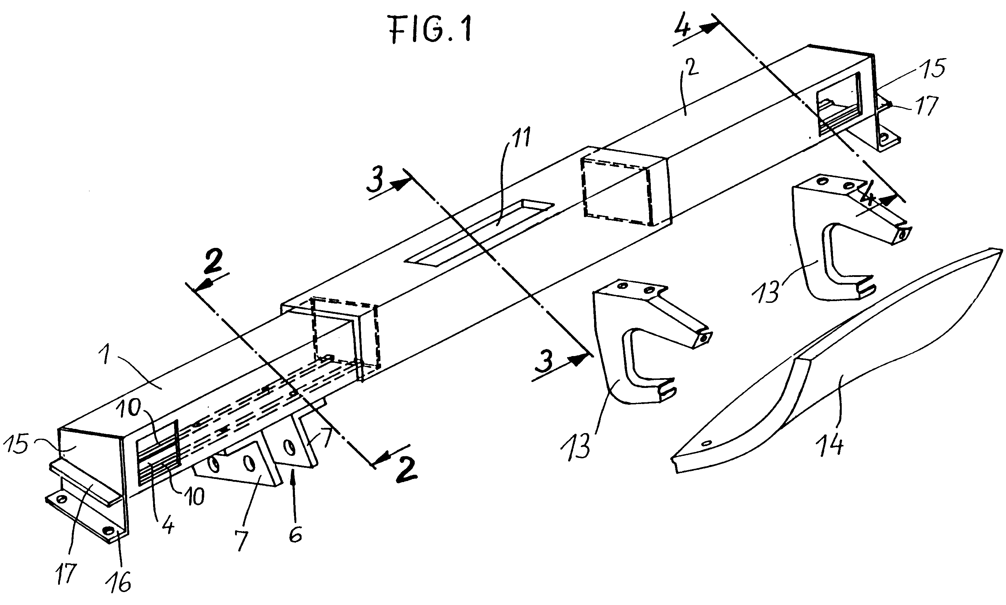

The crossmember depicted in Fig. 1 comprises three light-alloy extruded parts, namely a driver's-side side part 1 with a closed box profile, a passenger-side side part 2 with a closed box profile and a central part 3 with an approximately L-shaped cross-section. The central part 3 overlaps the inner ends of the side parts 1 and 2 and is welded to them. The inner ends of the side parts 1, 2 lie at a distance apart and, as a result of the L-shaped cross-section of the central part 3, an interspace which is open towards the bottom and towards the front, i.e. towards the left in Fig. 1, is thereby formed, this interspace being used to accommodate a heating or air-conditioning unit. A mount 6 for the steering column is bolted to the lower wall 4 of the passenger-side ride part 2 by means of bolts 5. In the illustrative embodiment, this mount comprises two angles 7, between which the steering column is arranged and which have holes 8 for fixing the steering column. The steering-column mount does not form the subject-matter of the invention and can also take some other form. To ensure secure fixing of the steering-column mount 6, the lower wall 4 of the driver's-side side part 1 is embodied with a greater wall thickness in the area of the threaded holes 9 for the fastening bolts 5 than in the remaining area. This increase in thickness is formed by ribs 10 which extend in the longitudinal direction over the entire length of the side part 1. The remaining walls of the driver's-side side part 1 and the walls of the passenger-side side part 2 have a considerably smaller wall thickness, thereby saving on weight and costs. The wall thickness of the central part 3 is, in contrast, relatively large since it does not have a closed profile and is moreover provided with a cut-out 11, which serves to guide the air from the heating or air-conditioning unit to the defroster vents in the dashboard mounted on the crossmember.

Threaded holes (not visible in the drawing) for the fixing of holders 13 for a knee pad 14 are provided in the longitudinal ribs 10 in the lower wall 12 of the passenger-side side part 2. In addition, a glove compartment or, alternatively, an air bag can be attached to this wall 12. The driver's-side side part 1, too, can be provided in its lower wall 4 or ribs 10 with threaded holes for the fixing of a knee pad for the driver.

The crossmember is fixed only to the A pillars of the vehicle body. For this purpose, the vertical end plates 15 are welded to the outer ends of the side parts 1, 2, the said end plates having horizontal flanges 16 for connection to brackets, attached to the A pillars, and ribs 17 which, upon installation of the crossmember, rest on the brackets, while the flanges lie below the brackets and are bolted to the brackets from below.

## Claims

1. Crossmember for the dashboard of a motor vehicle, which crossmember extends across the width of the interior of the motor vehicle and bolted to the underside of which is a mount (6) for the steering column, characterized in that the crossmember comprises three light-alloy extruded parts, namely two side parts (1, 2) with a closed box profile and a central part 3 welded to the said side parts, and in that the lower wall (4) of the driver's-side side part (1) has a greater wall thickness in the area of the fixing points (9) for the steering-column mount (6) than the remaining walls of this side part (1) and than the walls of the passenger-side side part (2).

2. Crossmember according to Claim 1, characterized in that the lower wall (4) of the driver's-side side part (1) has ribs (10) which extend in the longitudinal direction over the entire length of the side part and have threaded holes (9) for the fastening bolts (5) of the steering-column mount (6).

3. Crossmember according to Claim 1 or 2, characterized in that vertical end plates (15) are welded to the outer ends of the side parts (1, 2), the said end plates having horizontal flanges (16) for connection to brackets attached to the A pillars of the vehicle body.

4. Crossmember according to Claim 3, characterized in that ribs (17) parallel to the flanges (16) are provided above the latter.

5. Crossmember according to one of Claims 1 to 4, characterized in that, on its lower wall (12), the passenger-side side part (2) has means for the fixing of a knee pad (14), a glove box and/or an air bag.

6. Crossmember according to one of Claims 1 to 5, characterized in that the central part (1) has an approximately L-shaped cross-section and covers the interspace between the mutually facing ends of the side parts (1, 2) at the top and in the direction of the interior of the vehicle.

## Patentansprüche

1. Querträger für das Armaturenbrett eines Kraftfahrzeuges, der sich über die Breite des Kraftfahrzeug-Innenraumes erstreckt, und an dessen Unterseite eine Halterung (6) für die Lenksäule angeschraubt ist,
**dadurch gekennzeichnet,**
daß der Querträger aus drei Leichtmetall-Strangpreßteilen besteht, nämlich zwei Seitenteilen (1, 2) mit einem geschlossenen Kastenprofil und einem mit diesen verschweißten Mittelteil 3, und daß die untere Wand (4) des fahrerseitigen Seitenteils (1) im Bereich der Befestigungsstellen (9) der Lenksäulen-Halterung (6) eine größere Wandstärke als die übrigen Wände dieses Seitenteils (1) und als die Wände des beifahrerseitigen Seitenteils (2) aufweisen.

2. Querträger nach Anspruch 1, dadurch gekennzeichnet, daß die untere Wand (4) des fahrerseitigen Seitenteils (1) sich in Längsrichtung über die ganze Länge des Seitenteils erstreckene Rippen (10) mit Gewindelöchern (9) für die Befestigungsschrauben (5) der Lenksäulen-Halterung 6) aufweist.

3. Querträger nach Anspruch 1 oder 2, dadurch gekennzeichnet, daß an die äußeren Enden der Seitenteile (1, 2) senkrechte Endplatten (15) angeschweißt sind, die waagrechte Flansche (16) zur Verbindung mit an den A-Säulen der Fahrzeugkarosserie angebrachten Konsolen aufweisen.

4. Querträger nach Anspruch 3, dadurch gekennzeichnet, daß oberhalb der Flansche (16) dazu parallele Rippen (17) vorgesehen sind.

5. Querträger nach einem der Ansprüche 1 bis 4, dadurch gekennzeichnet, daß das beifahrerseitige Seitenteil (2) an seiner unteren Wand (12) Mittel zur Befestigung eines Kniepolsters (14), eines Handschuhkastens und/oder eines Airbag aufweist.

6. Querträger nach einem der Ansprüche 1 bis 5, dadurch gekennzeichnet, daß das Mittelteil (1) einen etwa L-förmigen Querschnitt hat und den Zwischenraum zwischen den einander zugekehrten Enden der Seitenteile (1, 2) nach oben und zum Fahrzeuginnenraum hin abdeckt.

## Revendications

1. Traverse pour le tableau de bord d'un véhicule à moteur, laquelle traverse s'étend sur toute la largeur de l'intérieur du véhicule à moteur et sous la face inférieure de laquelle est boulonné un support (6) pour la colonne de direction, caractérisée en ce qu'elle comprend trois pièces filées en alliage léger, à savoir deux pièces latérales (1,2) ayant un profil en caisson fermé et une pièce médiane (3) soudée auxdites pièces latérales, et en ce que la paroi inférieure (4) de la pièce latérale (1) du côté du conducteur a, dans la région des points de fixation (9) pour le support (6) de la colonne de direction, une plus grande épaisseur que le reste des parois de cette pièce latérale (1) et que les parois de la pièce latérale (2) du côté du passager.

2. Traverse selon la revendication 1, caractérisée en ce que la paroi inférieure (4) de la pièce latérale (1) du côté du conducteur comporte des nervures (10) qui s'étendent dans la direction longitudinale sur toute la longueur de la pièce latérale et présentent des trous taraudés (9) pour les boulons de fixation (5) du support (6) de colonne de direction.

3. Traverse selon la revendication 1 ou 2, caractérisée en ce que des plaques verticales d'extrémité (15) sont soudées aux extrémités externes des pièces latrales (1,2), lesdites plaques d'extremité comportan des brides horizontales (16) pour le raccordement à des pattes d'attache fixées aux montants A de la carrosserie du véhicule.

4. Traverse selon la revendication 3, caractérisée en ce que des nervures (17) parallèles aux brides (16) sont prévues au-dessus de ces dernières.

5. Traverse selon l'une quelconque des revendications 1 à 4, caractérisée en que la pièce latérale (2) du côté du passager comporte, sur sa paroi inférieure (12), des moyens pour la fixation d'un protège-genoux (14), d'une boîte à gants et/ou d'un coussin gonflable.

6. Traverse selon l'une quelconque des revendications 1 à 5, caractérisée en ce que la pièce médiane (3) a approximativement une section en L et couvre, en haut et vers l'intérieur du véhicule, l'espace intermédiaire entre les extrémités des pièces latérales (1,2) qui se font face.
